# EUROPEAN PATENT APPLICATION

(11) **EP 4 300 091 A1**
(43) Date of publication of application: **03.01.2024**
(21) Application number: 22759290.4
(22) Date of filing: 01.02.2022
(51) Int. Cl.: G01N 27/416

(54) **ELECTROCHEMICAL GAS SENSOR AND ELECTROCHEMICAL GAS SENSOR MANUFACTURING METHOD**

(30) Priority: 26.02.2021 JP 2021030006
(71) Applicant: Panasonic Intellectual Property Management Co., Ltd., Osaka-shi, Osaka 540-6207 (JP)
(72) Inventor: TAMURA, Satoru, Kadoma-shi, Osaka 571-0057 (JP); FUKUI, Suguru, Kadoma-shi, Osaka 571-0057 (JP); TSUKAHARA, Norihito, Kadoma-shi, Osaka 571-0057 (JP); UEYAMA, Yasuhiro, Kadoma-shi, Osaka 571-0057 (JP); HASHIMOTO, Yusuke, Kadoma-shi, Osaka 571-0057 (JP)
(74) Representative: Müller-Boré & Partner Patentanwälte PartG mbB
(86) International application number: PCT/JP2022/003755
(87) International publication number: WO 2022/181249

(57) **Abstract**

An electrochemical gas sensor according to one embodiment of the present invention comprises an electrolyte film, a working electrode disposed so as to touch the electrolyte film, a counter electrode disposed so as to touch the electrolyte film and not touch the working electrode, and an insulating substrate that is disposed so as to face the electrolyte film and has a through hole formed therein. A metal layer is formed on the surface of the insulating substrate facing the electrolyte film. The working electrode comprises a first layer that touches the electrolyte film and a second layer that is formed over at least a portion of the metal layer and touches the first layer.

## Description

### TECHNICAL FIELD

The present disclosure relates to an electrochemical gas sensor and a production method of the electrochemical gas sensor.

### BACKGROUND ART

Conventionally, there is known an electrochemical gas sensor that comprises a working electrode, a counter electrode, and an ion conductor. In the electrochemical gas sensor, for example, the working electrode and the counter electrode are connected through an external circuit, and when a detection target gas such as carbon monoxide flows into the sensor, cations and electrons are generated at the working electrode. Electrons flow to the counter electrode through the external circuit, and by measuring the short-circuit current at this time, the concentration of the gas can be detected.

Electrochemical gas sensors are classified roughly into sensors in which a liquid electrolyte is used as the ion conductor and sensors in which a solid electrolyte is used. For example, Patent Literature 1 discloses an electrochemical gas sensor that comprises a solid polyelectrolyte film, a working electrode, a counter electrolyte, a gas diffusion layer, and a filter. This sensor is characterized in that a porous conductive gas diffusion layer coats the working electrode and the gas diffusion layer has hydrophilicity or the filter is composed of hydrophilic activated carbon. Patent Literature 1 describes an effect of making it possible to restrain decrease in sensitivity in dry atmosphere.

### CITATION LIST

### PATENT LITERATURE

PATENT LITERATURE 1: International Publication No. WO 2017/047316

### SUMMARY

### TECHNICAL PROBLEM

In an electrochemical gas sensor, cost reduction, size reduction, and sensitivity increase are important problems. For realizing increase in the sensitivity of the sensor, it is necessary to stabilize a baseline that is output when the detection target gas does not exist. As a result of studies by the inventors, it has been found that the noise of the baseline increases and the sensitivity of the sensor decreases when the contact resistance of the laminate structure of the sensor is unstable. It is possible for a fastening member to be attached to the sensor and the laminate structure to be strongly pressed as means for stabilizing the contact resistance of the laminate structure, but in this case, there are expected problems such as complication of the structure of the sensor and increase in the size of the sensor.

An object of the present disclosure is to provide an electrochemical gas sensor that has a structure not requiring a special fastening jig or the like, and that has excellent baseline stability.

### SOLUTION TO PROBLEM

An electrochemical gas sensor that is an aspect of the present disclosure comprises: an electrolyte film; a working electrode that is disposed so as to contact with the electrolyte film; a counter electrode that is disposed so as to contact with the electrolyte film and not contact with the working electrode; and an insulating substrate that is disposed so as to be opposed to the electrolyte film and in which a through-hole is formed, in which a metal layer is formed on a face of the insulating substrate, the face of the insulating substrate being opposed to the electrolyte film, and the working electrode includes a first layer that contacts with the electrolyte film and a second layer that is formed on at least a part of the metal layer and that abuts on the first layer.

A production method of an electrochemical gas sensor that is an aspect of the present disclosure includes the steps of: forming first layers on an electrolyte film, the first layers constituting a working electrode and a counter electrode respectively; forming a metal layer on at least one insulating substrate in which a through-hole is formed, the metal layer being divided into a first region and a second region; forming second layers on at least parts of the first region and the second region of the metal layer, the second layers constituting the working electrode and the counter electrode respectively; and disposing the electrolyte film and the at least one insulating substrate to overlap with each other, such that the first layer and the second layer of the working electrode abut on each other and the first layer and the second layer of the counter electrode abut on each other.

### ADVANTAGEOUS EFFECTS OF INVENTION

According to the aspect of the present disclosure, it is possible to provide an electrochemical gas sensor that has a structure not requiring a special fastening jig or the like, and that has a high baseline stability. According to the aspect of the present disclosure, for example, it is possible to realize cost reduction, size reduction, and sensitivity increase for the electrochemical gas sensor.

### BRIEF DESCRIPTION OF DRAWING

FIG. 1 is an exploded perspective view of an electrochemical gas sensor that is an example of an embodiment.
FIG. 2 is a cross sectional view of the electrochemical gas sensor that is the example of the embodiment.
FIG. 3 is a diagram showing an electrode disposition on an electrolyte film.
FIG. 4 is a diagram showing an electrode disposition on an insulating substrate.
FIG. 5 is a diagram for describing a production method of the electrochemical gas sensor that is the example of the embodiment.
FIG. 6 is a cross sectional view showing a modification of the electrochemical gas sensor.

### DESCRIPTION OF EMBODIMENTS

An example of an embodiment of an electrochemical gas sensor according to the present disclosure will be described below in detail with reference to the drawings. The present disclosure includes selective combinations of a plurality of embodiments and modifications described below.

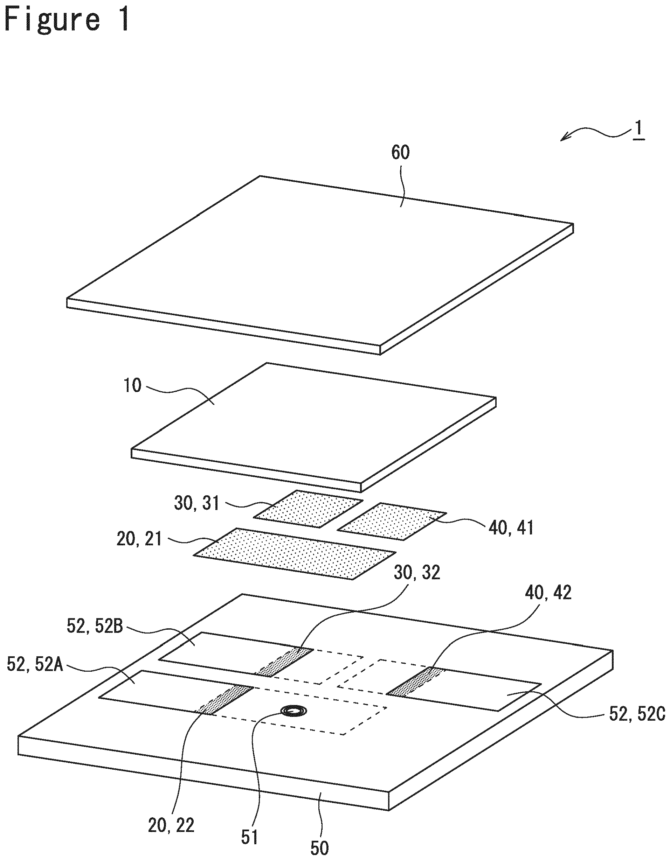

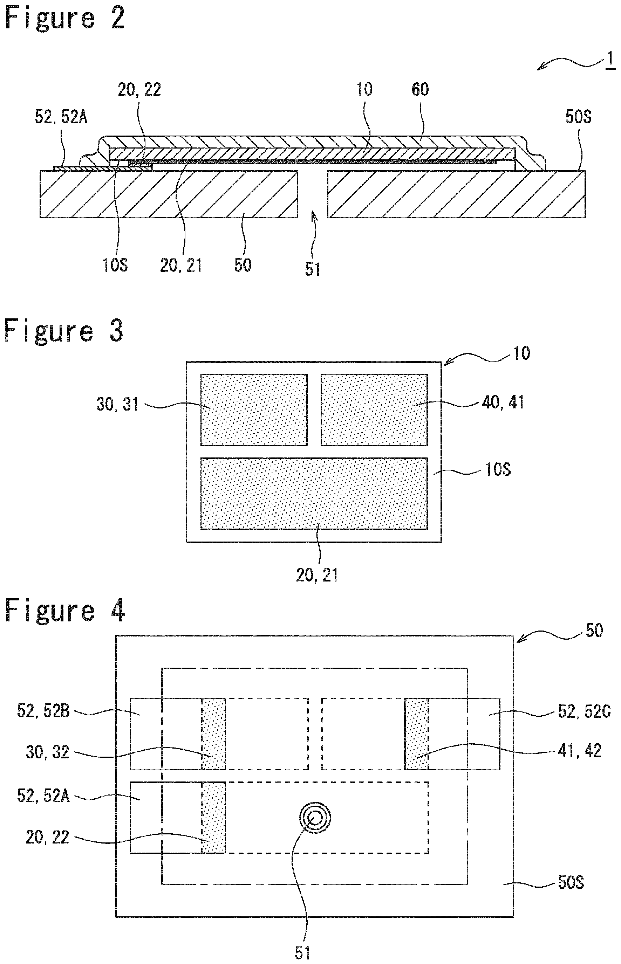

FIG. 1 is an exploded perspective view of an electrochemical gas sensor 1 that is an example of the embodiment, and FIG. 2 is a cross sectional view of the electrochemical gas sensor 1. FIG. 2 schematically shows a sensor cross-section at a portion where a working electrode 20 is disposed. In FIG. 2, for clarification of the figure, an electrolyte film 10, the working electrode 20 and the like are illustrated as flat layers. Therefore, a large gap is illustrated between an opposed face 10S of the electrolyte film 10 and an opposed face 50S of an insulating substrate 50, but actually, the opposed faces 10S, 50S contact each other.

As shown in FIG. 1 and FIG. 2, the electrochemical gas sensor 1 comprises the electrolyte film 10, the working electrode 20 that is disposed so as to contact the electrolyte film 10, and a counter electrode 30 that is disposed so as to contact the electrolyte film 10 and that is disposed so as not to contact the working electrode 20. Further, the electrochemical gas sensor 1 comprises an insulating substrate 50 that is disposed so as to be opposed to the electrolyte film 10 and in which a through-hole 51 is formed. The working electrode 20 and the counter electrode 30 are disposed through the electrolyte film 10 such that ion conduction is possible, and are electrically connected through an unillustrated external circuit. The working electrode 20 is an electrode into which gas as a detection target flows, and is also called a detection electrode.

Although described later in detail, the electrochemical gas sensor 1 has a laminate structure in which the electrolyte film 10, the working electrode 20, the counter electrode 30, and the insulating substrate 50 are disposed so as to be laminated, and in which the working electrode 20 and the counter electrode 30 are interposed between the electrolyte film 10 and the insulating substrate 50. A metal layer 52 is formed on a face of the insulating substrate 50 that is opposed to the electrolyte film 10. The working electrode 20 includes a first layer 21 that contacts the electrolyte film 10 and a second layer 22 that is formed on at least a part of the metal layer 52 and that abuts on the first layer 21. By forming the first layer 21 and the second layer 22, the resistance value of the sensor is decreased and stabilized, and the stability of the baseline is significantly enhanced, even when a special fastening jig or the like is not used.

The electrochemical gas sensor 1 causes the gas as the detection target to flow into the working electrode 20, oxidizes or reduces molecules in the gas on the working electrode 20, and detects the concentration of the gas by measuring a change in electric current or electric potential due to the oxidation-reduction reaction. Although the electrochemical gas sensor 1 may be an electric potential detection type, an electric current detection type sensor is exemplified in the embodiment. When molecules in the gas are oxidized or reduced on the working electrode 20, electrons are generated or consumed, so that electric current flows between the working electrode 20 and the counter electrode 30. There is a proportional relation between the electric current value and the gas concentration, and therefore the gas concentration can be detected by measuring the electric current value. When electrons are generated or consumed by the oxidizationreduction reaction on the working electrode 20, cations or anions are generated, and the generated ions move to the counter electrode 30 through the electrolyte film 10.

The electrochemical gas sensor 1 further comprises a reference electrode 40 that is disposed so as to contact the electrolyte film 10 and not to contact the working electrode 20 and the counter electrode 30. The reference electrode 40 is an electrode that serves as a criterion when the electric potential of the working electrode 20 is controlled or measured, and is also called a criterion electrode. For example, the reference electrode 40 is disposed on a face that is a surface of the electrolyte film 10 and that is the same as a face on which the counter electrode 30 is disposed. The working electrode 20 is connected with the reference electrode 40 through an unillustrated external circuit, and is configured so as to maintain a constant electric potential with respect to the reference electrode 40, by the external circuit. For example, the electric potential of the working electrode 20 is kept at an electric potential at which the detection target gas can be oxidized.

An example in which the detection target gas is carbon monoxide (CO) will be described below. However, sensors to which the configuration of the electrochemical gas sensor according to the present disclosure can be applied are not limited to carbon monoxide sensors. The configuration of the electrochemical gas sensor according to the present disclosure can be widely applied, particularly, to electrochemical gas sensors in which solid electrolyte films are used, and can be also applied, for example, to sensors in which hydrogen sulfide (H₂S), nitrogen monoxide (NO), nitrogen dioxide (NO₂), sulfur dioxide (SO₂), ozone (Os), ammonia (NH₃), and the like are adopted as the detection target gas.

In the case where the detection target gas of the electrochemical gas sensor 1 is CO, a CO oxidization reaction shown by Formula (I) is caused in the working electrode 20.

CO + H₂O -> CO₂ + 2FT + 2e⁻ ... (1)

CO having flowed into the working electrode 20 reacts with water molecules, and produces CO₂, so that protons (H⁺) and electrons are generated. The protons move through the electrolyte film 10, and the electrons move through the external circuit, to the counter electrode 30. In the counter electrode 30, a reaction shown by Formula (2) is caused.

1/2O₂ + 2FT + 2e⁻ -> H₂O ... (2)

The protons and electrons generated in the working electrode 20 react with oxygen of air in the counter electrode 30, and produce water. At this time, there is a proportional relation between the electric current that flows through the external circuit and the amount of CO that flows into the working electrode 20, and therefore the concentration of CO is detected by measuring the electric current.

The electrochemical gas sensor 1 further comprises a sealing member 60 that seals the electrolyte film 10 and the respective electrodes. For example, the sealing member 60 is joined to a surface of the insulating substrate 50, and sandwiches the electrolyte film 10 and the respective electrodes, together with the insulating substrate 50. The sealing member 60 covers the whole of the electrolyte film 10 and the respective electrodes, and seals the electrolyte film 10 and the respective electrodes such that CO flows in only from the through-hole 51 of the insulating substrate 50. The sealing member 60, preferably, should be composed of a material having a low transmittance for CO, and for example, is constituted of a gas barrier layer such as a metal layer and a ceramic layer. Hereinafter, for explanatory convenience, a space that is surrounded by the insulating substrate 50 and the sealing member 60, and in which the electrolyte film 10 and the electrodes are housed, is sometimes referred to a "housing part".

Configurations of the electrolyte film 10, the insulating substrate 50 and the electrodes that constitute the electrochemical gas sensor 1 will be described below in detail.

### [Electrolyte Film]

The electrolyte film 10 is an ion conductor film that transmits the ions generated in the working electrode 20 to the counter electrode 30, and is an insulating film that does not have electron conductivity. The electrolyte film 10 may have, for example, a configuration in which a liquid electrolyte is absorbed in a holding member such as a porous sheet, but preferably, should be a solid electrolyte film composed of a polymer material. In the embodiment, a solid electrolyte film having proton conductivity is used. An example of the solid electrolyte film having proton conductivity is a polymer film in which a proton-conducting group such as a sulfonate group is introduced into a carbon hydride polymer or a fluorine polymer. As the electrolyte film 10, a commercial product such as Nafion (registered trademark: manufactured by Du Pont) may be used.

The thickness of the electrolyte film 10 is not particularly limited, and is greater than or equal to 5 µm and less than or equal to 100 µm, as an example. In FIG. 1, the electrolyte film 10 having a planar-view quadrangular shape is illustrated, but the shape of the electrolyte film 10 is not particularly limited, and can be appropriately altered depending on the shape of the electrochemical gas sensor 1, and the like. Although described later in detail, in the embodiment, the working electrode 20, the counter electrode 30, and the reference electrode 40 are formed on an identical plane of the electrolyte film 10. Moreover, the electrolyte film 10 is disposed so as to be opposed to the insulating substrate 50, in a state where the face on which the respective electrodes are formed is oriented to the insulating substrate 50 side.

### [Insulating Substrate]

The insulating substrate 50 is a substrate that includes the through-hole 51 and that has insulation, and the metal layer 52 is formed on the opposed face 50S that faces the electrolyte film 10. In the embodiment, the insulating substrate 50 functions as a support member for the electrolyte film 10 and the like, and functions as a sealing member that seals the electrolyte film 10 and the electrodes together with the sealing member 60. In FIG. 1, a substrate having a planar-view quadrangular shape is illustrated, but the shape of the insulating substrate 50 is not particularly limited, and can be appropriately altered depending on the shape of the electrochemical gas sensor 1, and the like.

The through-hole 51 of the insulating substrate 50 is formed at a position opposed to the working electrode 20 (first layer 21), and functions as a gas inflow hole for introducing the gas into the working electrode 20. In the embodiment, only one through-hole 51 is formed at the position opposed to the working electrode 20, and through-holes communicating with the housing part do not exist at positions opposed to the counter electrode 30 and the reference electrode 40, and the like. The electrochemical gas sensor 1 is configured such that CO flows into the housing part only from the through-hole 51, and the amount of CO that acts on the working electrode 20 is controlled. Therefore, the CO concentration can be accurately evaluated from the proportional relation between the inflow amount of CO and the electric current value. For example, the through-hole 51 is a through-hole whose opening has a perfect circle shape, and has a diameter of greater than or equal to 0.05 mm and less than or equal to 2 mm.

The through-hole 51 of the insulating substrate 50 may deviate from the working electrode 20, and may be formed at a position opposed to both of the working electrode 20 and the counter electrode 30. Further, a plurality of through-holes 51 may be formed on the insulating substrate 50. As an example, there is a configuration in which one or more through-holes 51 are formed at a position opposed to the counter electrode 30 in addition to the position opposed to the working electrode 20. Since oxygen is necessary in the counter electrode 30, it is possible to prevent decrease in oxygen concentration around the counter electrode 30, by providing the through-hole 51 at the position opposed to the counter electrode 30.

The metal layer 52 is formed at a position overlapping with at least the respective electrodes (first layers), on the opposed face 50S of the insulating substrate 50 that is opposed to the electrolyte film 10. In the embodiment, each of first layers of the working electrode 20, the counter electrode 30, and the reference electrode 40 is formed on the opposed face 10S of the surface of the electrolyte film 10, and the opposed face 10S is opposed to the insulating substrate 50 (see FIG. 3 described later). Moreover, the metal layer 52 includes a first region 52A, a second region 52B, and a third region 52C that are formed so as to correspond to the working electrode 20, the counter electrode 30, and the reference electrode 40, respectively. The respective regions of the metal layer 52 are formed on the surface of the insulating substrate 50, so as to be away from each other, and function as an extraction electrode that electrically connects the respective electrodes and the external circuit.

For example, the metal layer 52 is formed on the surface of the insulating substrate 50, by performing pattern etching (the shape of the electrodes) on an insulating substrate in which a copper foil is laminated on one face, and further plating a portion where the copper foil remains. An example of the metal layer 52 is a layer in which copper is plated with nickel/gold, and has a thickness of greater than or equal to 5 µm and less than or equal to 30 µm. The metal layer 52 may be formed by a method such as vapor deposition. Although described later in detail, second layers constituting the respective electrodes are formed at the respective regions of the metal layer 52.

### [Electrode (Working Electrode, Counter Electrode, Reference Electrode)]

FIG. 3 is a diagram showing the disposition of the electrodes (first layers) on the opposed face 10S of the electrolyte film 10. FIG. 4 is a diagram showing the disposition of the metal layer 52 and the electrodes (second layers) on the opposed face 50S of the insulating substrate 50. In FIG. 4, ranges where the first layers of the respective electrodes formed on the opposed face 10S of the electrolyte film 10 overlap are shown by broken lines, and a range where the housing part is covered with the sealing member 60 is shown by a one-dot chain line.

As shown in FIG. 3 and FIG. 4, the working electrode 20 includes the first layer 21 formed on the opposed face 10S of the electrolyte film 10 and the second layer 22 formed on the metal layer 52 of the insulating substrate 50. The second layer 22 is formed at the first region 52A of the metal layer 52, and abuts on the first layer 21. That is, the working electrode 20 is formed on the electrolyte film 10 and the insulating substrate 50, so as to be divided, and is configured such that the layers formed on the electrolyte film 10 and the insulating substrate 50 respectively overlap with each other. In this case, the resistance value of the sensor is decreased and stabilized and the stability of base current is significantly enhanced, even when the laminate structure of the sensor is not pressed strongly using a special fastening jig or the like.

The first layer 21 of the working electrode 20 is formed such that the opposed face 10S of the electrolyte film 10 is coated with an electrode material, and tightly contacts the opposed face 10S. Similarly, the second layer 22 tightly contacts the opposed face 50S of the insulating substrate 50. The first layer 21 and the second layer 22 are composed of substantially the same material, and the surface states of the respective layers are the same. The surfaces of the respective layers have unevenness compared to the metal layer 52 that functions as an extraction electrode, and have moderate surface roughness. Therefore, the contact area is large at the interface between the first layer 21 and the second layer 22, and a good contact state is obtained when the pressing force is small. As a result, it is thought that the contact resistance is decreased and stabilized, and the noise of the base current is restrained. In contrast to this, in the case where the second layer 22 does not exist, the first layer 21 contacts the smooth metal layer 52, and in this case, it is not easy to obtain a good contact state.

On the opposed face 10S of the electrolyte film 10, a first layer 31 of the counter electrode 30 and a first layer 41 of the reference electrode 40 are further formed. The first layers of the respective electrodes are distantly formed so as not to overlap with each other on the opposed face 10S. In the example shown in FIG. 3, the first layer 21 of the working electrode 20 is formed so as to have a larger area than the first layers 31, 41 of the counter electrode 30 and the reference electrode 40. Each first layer is formed in a planar-view quadrangular shape, but the planar-view shape of each layer is not particularly limited. For example, the first layers of the respective electrodes are formed so as to have the same thickness as each other. An example of the thickness of the first layer is greater than or equal to 1 µm and less than or equal to 200 µm.

On the opposed face 50S of the insulating substrate 50, a second layer 32 of the counter electrode 30 is formed at the second region 52B of the metal layer 52, and a second layer 42 of the reference electrode 40 is formed at the third region 52C of the metal layer 52. That is, the counter electrode 30 includes the first layer 31 that is formed on the electrolyte film 10 and the second layer 32 that is formed on the metal layer 52 of the insulating substrate 50 and that abuts on the first layer 31. Similarly, the reference electrode 40 includes the first layer 41 that is formed on the electrolyte film 10 and the second layer 42 that is formed on the metal layer 52 of the insulating substrate 50 and that abuts on the first layer 41. Also, in the counter electrode 30 and the reference electrode 40, it is possible to more effectively improve the stability of the base current by forming the second layers 32, 42 on the metal layer 52.

For example, each layer of the working electrode 20, the counter electrode 30, and the reference electrode 40 contains a catalyst, a conductive carrier, and an ionomer. In the embodiment, the respective electrodes are composed of the same material. The catalyst promotes the CO oxidization reaction, and the reaction in the above Formula (1) is caused on the catalyst of the working electrode 20. Examples of the catalyst include platinum (Pt), palladium (Pd), gold (Au), silver (Ag), ruthenium (Ru), rhodium (Ru), iridium (Ir), cobalt (Co), iron (Fe), nickel (Ni), and the like. Among them, preferably, a noble metal catalyst such as Pt or a Pt-Ru alloy should be used.

The above conductive carrier is a conductive material that holds the catalyst. Preferable examples of the conductive carrier include carbon materials such as carbon black, acetylene black, Ketjen black, graphite carbon, and carbon nanotube. For example, the catalyst is fixed to particle surfaces of the carbon material. The above ionomer is an ion-conductive material, and allows the movement of protons generated by the reaction. A preferable example of the ion-conductive material is Nafion (registered trademark: manufactured by Du Pont), and a material having the same composition as the electrolyte film is used.

The metal layer 52 of the insulating substrate 50 will be supplementally described. As shown in FIG. 4, the metal layer 52 is formed in ranges where the first layers of the respective electrodes overlap, on the opposed face 50S of the insulating substrate 50. The first region 52A of the metal layer 52 is formed in a range where the first layer 21 of the working electrode 20 overlaps on the opposed face 50S. The first region 52A is formed from a longitudinal end of the range to the outside of the housing part. On the first region 52A, a lead wire, a connector, and the like are connected to a portion that extends to the outside of the housing part, for example, and the respective regions and the external circuit are electrically connected.

The second region 52B of the metal layer 52 is formed in a range of the opposed face 50S where the first layer 31 of the counter electrode 30 overlaps. Further, the third region 52C of the metal layer 52 is formed in a range of the opposed face 50S where the first layer 41 of the reference electrode 40 overlaps. Both of the second region 52B and the third region 52C are formed from ends of the ranges where the respective first layers overlap to outsides of the housing part.

As described above, the second layer 22 of the working electrode 20 is formed at the first region 52A of the metal layer 52. The second layer 22 may be formed over the whole region of the first region 52A, but preferably, should be formed only at a region of the first region 52A that is included in the range where the first layer 21 of the working electrode 20 overlaps. The second layer 22 only needs to be formed at at least a part of the first region 52A in the range where the first layer 21 of the working electrode 20 overlaps.

The second layer 32 of the counter electrode 30 is formed at at least a part of a region that is in the second region 52B of the metal layer 52 and that is included in the range where the first layer 31 of the counter electrode 30 overlaps. Further, the second layer 42 of the reference electrode 40 is formed at at least a part of a region that is in the third region 52C of the metal layer 52 and that is included in the range where the first layer 41 of the reference electrode 40 overlaps. For example, the second layers of the respective electrodes are formed so as to have the same thickness as each other. An example of the thickness of the second layer is greater than or equal to 1 µm and less than or equal to 200 µm, and the second layer may be formed so as to have a thickness less than or equal to the first layer.

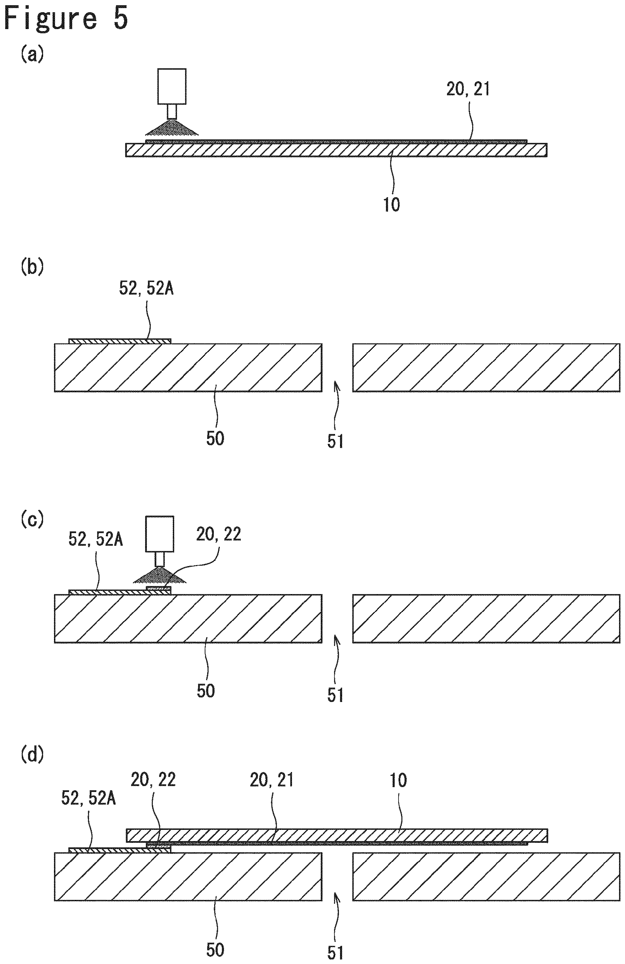

FIG. 5 is a diagram for describing an example of a production method of the electrochemical gas sensor 1. FIG. 5 illustrates a manner in which the first region 52A of the metal layer 52 is formed on a surface of the insulating substrate 50 and the layer of the working electrode 20 is formed on surfaces of the electrolyte film 10 and the insulating substrate 50, by spray coating with the electrode material.

For example, the electrochemical gas sensor 1 is produced through the following steps.
(1) A step in which the electrode material is applied on the electrolyte film 10, and the first layers 21, 31 constituting the working electrode 20 and the counter electrode 30 respectively are formed (see (a) of FIG. 5).
(2) A step in which the metal layer 52 divided into the first region 52A and the second region 52B is formed on at least one insulating substrate 50 on which the through-hole 51 is formed (see (b) of FIG. 5).
(3) A step in which the second layers 22, 32 constituting the working electrode 20 and the counter electrode 30 respectively are formed on at least parts of the first region 52A and second region 52B of the metal layer 52 (see (c) of FIG. 5).
(4) A step in which the electrolyte film 10 and at least one insulating substrate 50 are disposed to overlap with each other such that the first layer 21 and second layer 22 of the working electrode 20 abut on each other, and the first layer 31 and second layer 32 of the counter electrode 30 abut on each other (see (d) of FIG. 5).

In the production steps for the electrochemical gas sensor 1 comprising the above-described structure, the first layer 21 of the working electrode 20 and the first layer 31 of the counter electrode 30 are formed on an identical plane of the electrolyte film 10. Further, the first region 52A and second region 52B of the metal layer 52 are formed on an identical plane of the one insulating substrate 50, and the second layer 22 of the working electrode 20 and the second layer 32 of the counter electrode 30 are formed on the respective regions. Then, the electrolyte film 10 and the insulating substrate 50 are overlapped with each other such that the first layer 21 and the second layer 22 are overlapped with each other and the first layer 31 and the second layer 32 are overlapped with each other.

In the step (1), for example, the surface of the electrolyte film 10 is coated with an ink containing the catalyst, the conductive carrier, and the ionomer, and by drying the coating film, dispersion medium is volatized and removed, so that the first layers 21, 31 of the working electrode 20 and the counter electrode 30 are formed. In the case where the reference electrode 40 is provided, the first layer 41 of the reference electrode 40 is further formed. The dispersion medium contained in the ink is not particularly limited, and as an example, is a mixed solvent of water and a lower alcohol such as ethanol. Examples of the ink coating method include spray coating, screen printing, inkjet printing, electrolytic spray coating, dispensing, and the like. Among them, spray coating or screen printing is preferable.

In the step (2), for example, the first region 52A and second region 52B of the metal layer 52 are formed on the surface of the insulating substrate 50, by the pattern etching of the above copper foil. A plate layer of nickel/gold or the like may be formed on the copper foil after etching. The first region 52A is formed in the range where the first layer 21 of the working electrode 20 overlaps in the step (4), and the second region 52B is formed in the range where the first layer 31 of the counter electrode 30 overlaps in the step (4). In the case where the reference electrode 40 is provided, the third region 52C of the metal layer 52 is further formed.

In the step (3), at least parts of the first region 52A and second region 52B of the metal layer 52 are coated with the above ink, and by drying the coating film, the second layers 22, 32 of the working electrode 20 and the counter electrode 30 are formed. In the case where the reference electrode 40 is provided, the second layer 42 of the reference electrode 40 is further formed. The second layers of the respective electrodes can be formed using the same ink as the first layers. In the step (4), the laminate structure of the sensor is formed by overlapping the electrolyte film 10 and the insulating substrate 50 such that the first layers and second layers of the respective electrodes abut on each other.

As described above, for the electrochemical gas sensor 1 comprising the above configuration, the second layers of the respective electrodes are formed on the metal layer 52 that functions as an extraction electrode, and thereby the area of the contact with the first layers of the respective electrode formed on the surface of the electrolyte film 10 is increased, so that a good contact state is obtained. Therefore, the contact resistance of the respective electrodes is decreased and stabilized, and the noise of the base current is restrained, so that increase in the sensitivity of the sensor can be realized. According to the electrochemical gas sensor 1, since a good contact state between electrodes can be secured even when the pressing force to the laminate structure is small, a special fastening member or the like is not required, and size reduction and cost reduction for the sensor are possible.

In the above-described embodiment, the design can be appropriately altered in a range that does depart from the object of the present disclosure. For example, in the above-described embodiment, the reference electrode 40 is formed using the same electrode material as the working electrode 20 and the counter electrode 30. However, the reference electrode may be composed of a different material from the working electrode and the counter electrode, and the working electrode and the counter electrode may be composed of different materials. Further, the structure of the electrochemical gas sensor may be a two-electrode structure in which only the working electrode and the counter electrode are provided as electrodes. Alternatively, the metal layer may be adopted as the reference electrode, or the counter electrode may also be used as the reference electrode and the electric potential of the working electrode may be set. Further, the second layers of the electrodes may be formed at regions other than the metal layer. In the electrochemical gas sensor, members such as a gas selection filter and a gas diffusion layer may be provided.

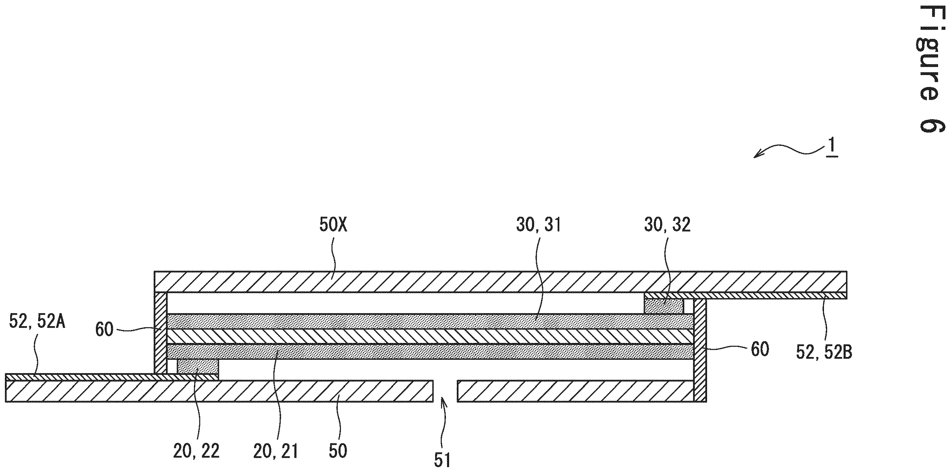

In the above-described embodiment, the configuration in which the working electrode 20, the counter electrode 30, and the reference electrode 40 are formed on an identical plane of the electrolyte film 10 has been exemplified. However, as shown in FIG. 6, the working electrode 20 may be formed on one face of the electrolyte film 10, and the counter electrode 30 and the reference electrode 40 may be formed on the other face of the electrolyte film 10.

FIG. 6 is a cross sectional view showing a modification of the electrochemical gas sensor 1. In a mode exemplified in FIG. 6, the first layer 21 of the working electrode 20 is formed on one face of the electrolyte film 10, and the first layer 31 of the counter electrode 30 is formed on the other face of the electrolyte film 10. The electrochemical gas sensor 1 shown in FIG. 6 has a sandwich structure in which the electrolyte film 10 is sandwiched by two insulating substrates 50, 50X. The insulating substrate 50 is a substrate including the through-hole 51 that functions as a gas inflow hole, and is disposed so as to be opposed to the one face of the electrolyte film 10 on which the first layer 21 of the working electrode 20 is formed. The insulating substrate 50X is a substrate including no through-hole, and is disposed so as to be opposed to the other face of the electrolyte film 10 on which the first layer 31 of the counter electrode 30 is formed. The insulating substrate 50X may include a through-hole that functions as an inflow hole for oxygen, for example.

The first region 52A of the metal layer 52 that functions as an extraction electrode is formed on a face of the insulating substrate 50 that is opposed to the electrolyte film 10. The first region 52A is formed at at least a part of a range where the first layer 21 of the working electrode 20 formed on the electrolyte film 10 overlaps, and is formed beyond a range where the insulating substrate 50 is opposed to the electrolyte film 10. On the first region 52A, the second layer 22 of the working electrode 20 is formed at at least a part of a range where the first layer 21 overlaps. The electrolyte film 10 and the respective electrodes are sealed by the sealing member 60, such that the detection target gas flows into the sensor only from the through-hole 51 of the insulating substrate 50.

Similarly to the first region 52A, the second region 52B of the metal layer 52 that functions as an extraction electrode for the counter electrode 30 is formed on a face of the insulating substrate 50X that is opposed to the electrolyte film 10. The second region 52B is formed at at least a part of a range where the first layer 31 of the counter electrode 30 formed on the electrolyte film 10 overlaps, and is formed beyond a range where the insulating substrate 50X is opposed to the electrolyte film 10. On the second region 52B, the second layer 32 of the counter electrode 30 is formed at at least a part of a range where the second layer 32 overlaps.

Also, in the mode exemplified in FIG. 6, by the overlapping and contact of the two layers that constitute each electrode, the noise of the base current can be sufficiently restrained, and the increase in sensitivity of the sensor can be realized. Although the reference electrode is not illustrated in FIG. 6, in the case where the reference electrode is provided, the reference electrode having a two-layer structure, preferably, should be formed on the other face of the electrolyte film 10 and the surface of the insulating substrate 50X that is opposed to the other face, similarly to the counter electrode 30.

### REFERENCE SIGNS LIST

1 electrochemical gas sensor, 10 electrolyte film, 10S, 50S opposed face, 20 working electrode, 21, 31, 41 first layer, 22, 32, 42 second layer, 30 counter electrode, 40 reference electrode, 50, 50X insulating substrate, 51 through-hole, 52 metal layer, 52A first region, 52B second region, 52C third region, 60 sealing member

## Claims

1. An electrochemical gas sensor, comprising:
an electrolyte film;
a working electrode that is disposed so as to contact the electrolyte film;
a counter electrode that is disposed so as to contact the electrolyte film and not to contact the working electrode; and
an insulating substrate that is disposed so as to be opposed to the electrolyte film and in which a through-hole is formed,
wherein a metal layer is formed on a face of the insulating substrate, the face of the insulating substrate being opposed to the electrolyte film, and
the working electrode includes a first layer that contacts the electrolyte film and a second layer that is formed on at least a part of the metal layer and that abuts on the first layer.

2. The electrochemical gas sensor according to claim 1, wherein the electrolyte film is a solid electrolyte film.

3. The electrochemical gas sensor according to claim 1 or 2, further comprising a reference electrode that is disposed so as to contact the electrolyte film and not to contact the working electrode and the counter electrode.

4. The electrochemical gas sensor according to claim 3, wherein the metal layer includes a first region, a second region, and a third region on the face of the insulating substrate that is opposed to the electrolyte film, the first region, the second region, and the third region being formed so as to correspond to the working electrode, the counter electrode, and the reference electrode, respectively.

5. A production method of an electrochemical gas sensor, including the steps of:
forming first layers on an electrolyte film, the first layers constituting a working electrode and a counter electrode respectively;
forming a metal layer on at least one insulating substrate in which a through-hole is formed, the metal layer being divided into a first region and a second region;
forming second layers on at least parts of the first region and the second region of the metal layer, the second layers constituting the working electrode and the counter electrode respectively; and
disposing the electrolyte film and the at least one insulating substrate to overlap with each other, such that the first layer and the second layer of the working electrode abut on each other and the first layer and the second layer of the counter electrode abut on each other.
